# EUROPÄISCHE PATENTSCHRIFT

(11) **EP 1 207 066 B1**
(45) Veröffentlichungstag und Bekanntmachung des Hinweises auf die Patenterteilung: **09.08.2006**
(21) Anmeldenummer: 01125610.4
(22) Anmeldetag: 26.10.2001
(51) Int. Cl.: B60J 7/043

(54) **Öffnungsfähiges Fahrzeugdach**
Open roof for vehicle
Toit ouvrant pour véhicule

(30) Priorität: 10.11.2000 DE 10055790
(43) Veröffentlichungstag der Anmeldung: 22.05.2002
(73) Patentinhaber: Webasto Vehicle Systems International GmbH, 82131 Stockdorf (DE)
(72) Erfinder: Wingen, Bernhard, 83620 Feldkirchen (DE); Seifert, Wolfgang, 82110 Germering (DE)
(74) Vertreter: Wiese, Gerhard

(56) Entgegenhaltungen:
- DE-A- 4 405 583
- DE-C- 4 130 206
- US-A- 4 602 815
- US-A- 5 730 487
- US-A- 5 765 908

## Beschreibung

Die vorliegende Erfindung betrifft ein öffnungsfähiges Fahrzeugdach gemäß dem Oberbegriff des Anspruchs 1.

Ein solches gattungsgemäßes Fahrzeugdach ist beispielsweise aus DE 33 45 122 A1 bekannt, wobei es sich bei dem Abdeckelement um den Deckel eines Spoilerdaches handelt, d.h. die erste und die zweite Führungsbahn sind so ausgebildet, dass der Deckel ausgehend von der Schließstellung mit seiner Hinterkante ausgestellt und in dieser Stellung nach hinten verschoben werden kann, um die Dachöffnung freizugeben. Die erste und die zweite Führungsbahn sind als Kulissenschlitze in einer dachfesten Kulisse ausgebildet und in Dachlängsrichtung hintereinander angeordnet, wobei jeweils ein deckelfester Kulissenstift in die Kulissenschlitze eingreift. Im Bereich des vorderen Kulissenstifts ist ein von einem Antriebskabel angetriebener Gleitschuh vorgesehen, welcher in eine dachfeste Führungsschiene eingreift, die gegenüberliegend zu der dachfesten Kulisse angeordnet ist. Nachteilig bei dieser Konstruktion ist, dass einerseits die Kulisse als zusätzliches Bauteil erforderlich ist, der Verlauf der Kulissenschlitze dahingehend beschränkt ist, dass eine Überkreuzung derselben ausgeschlossen ist, und ferner eine stabile Deckelführung nur im vorderen Bereich des Deckels mittels des Gleitschuhs gegeben ist.

Es ist Aufgabe der vorliegenden Erfindung, ein öffnungsfähiges Fahrzeugdach zu schaffen, bei welchem das Abdeckelement mittels des Eingriffs zweier an dem Abdeckelement befestigter Gleitelemente in zwei unterschiedliche Führungsbahnen ausstellbar ist, wobei eine möglichst flexible Gestaltung der Führungsbahnen und insgesamt eine möglichst stabile Führung des Abdeckelements erzielt werden soll.

Diese Aufgabe wird erfindungsgemäß durch ein Fahrzeugdach mit den Merkmalen des Anspruchs 1 gelöst. Bei dieser erfindungsgemäßen Lösung ist vorteilhaft, dass dadurch, dass die erste und die zweite Führungsbahn in Dachquerrichtung zueinander versetzt sind, die beiden Führungsbahnen unabhängig voneinander immer kreuzungsfrei ausgelegt werden können und ferner eine maximale Stabilität der Führung erreicht werden kann.

Bevorzugte Ausgestaltungen der Erfindung sind in den Unteransprüchen angegeben.

Im folgenden wird eine Ausführungsform der Erfindung anhand der beigefügten Zeichnungen beispielhaft näher erläutert. Es zeigt:
FIG. 1 eine Seitenansicht eines erfindungsgemäßen Fahrzeugdaches und
FIG. 2 eine Querschnittsansicht der in Fig. 1 gezeigten Führungsschiene zeigt.

An einem Deckel 10, welcher zum Abdecken einer Öffnung 12 in einer festen Dachhaut 14 vorgesehen ist, ist ein Träger 16 befestigt, der an seinem vorderen Ende mit einem Gleitelement 18 versehen ist, das in einem ersten Führungskanal 20 in Dachlängsrichtung verschiebbar bezüglich der Hochrichtung geführt ist. In seinem mittleren Bereich ist der Träger 16 mit einem zweiten Gleitelement 22 versehen, das in einem zweiten Führungskanal 24 ebenfalls bezüglich der Hochrichtung geführt ist. Ferner ist im Bereich des zweiten bzw. hinteren Gleitelements 22 ein Kulissenschlitz 26 in dem Träger 16 vorgesehen, in welchen ein Kulissenstift 28 eingreift, der an einem Schlitten 30 ausgebildet ist, der mittels zweier Gleitschuhe 32, die in einen dritten dachfesten Führungskanal 34 eingreifen, in Dachlängsrichtung verschiebbar geführt ist. Der Schlitten 30 wird in bekannter Weise von einem drucksteifen Antriebskabel 36 angetrieben, welches wiederum von einem nicht dargestellten Antrieb angetrieben wird, der in üblicher Weise ausgebildet sein kann, d.h. mit Elektromotor und von diesem angetriebenen Antriebsritzel, welches in das Antriebskabel 36 eingreift. Abgesehen von einem Anfangsbereich 38 bzw. 41 verlaufen die Führungskanäle 20 bzw. 24 im wesentlichen horizontal, wobei jedoch der Führungskanal 24 für das hintere Gleitelement 22 in seinem horizontalen Teil höher liegt als der Führungskanal 20 für das vordere Gleitelement 18. Der Führungskanal 34 für den Schlitten 30 verläuft durchgängig im wesentlichen horizontal und liegt tiefer als die anderen beiden Führungskanäle 20 und 24.

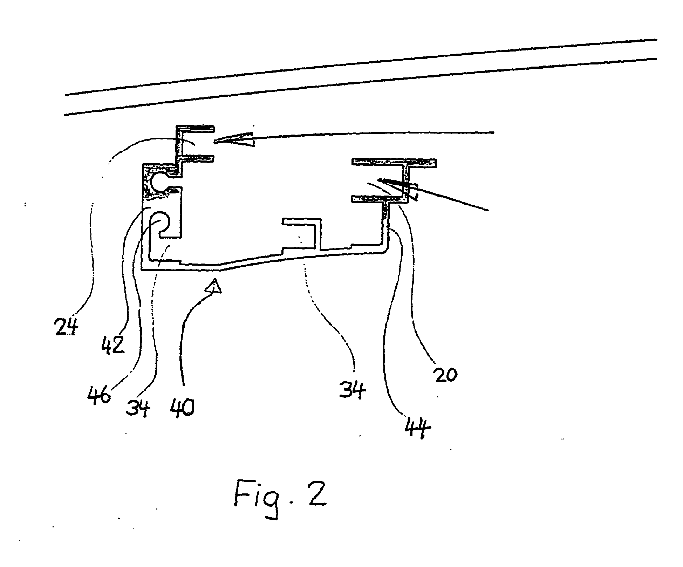

Wie aus Fig. 2 ersichtlich ist, bilden die Führungskanäle 20, 24 und 34 einen Teil einer im wesentlichen U-förmigen dachfesten Führung 40, wobei der Führungskanal 24 für das hintere Gleitelement 22 auf der Innenseite einer außen liegenden Wange 42 der Führung 40 ausgebildet ist, während der Führungskanal 20 für das vordere Gleitelement 18 auf der Innenseite einer innen liegenden Wange 44 der Führung 40 ausgebildet ist. Der Führungskanal 34 für den Schlitten 30 ist im Bodenbereich der Schiene 40 ausgebildet und verläuft zum Teil in der äußeren Wange 42, wo auch ein Kabelkanal 46 vorgesehen ist. Die Anfangsbereiche 38 und 41 der Führungskanäle 20 bzw. 24 sind als Einsatzteile ausgebildet, die in die Führung 40 einsetzbar sind.

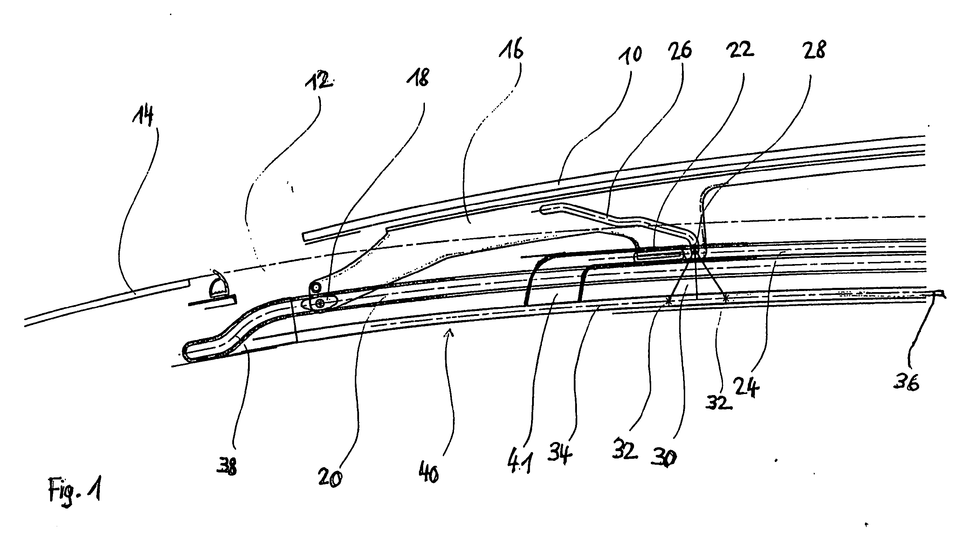

In Fig. 1 ist der Deckel 10 in teilweise geöffnetem Zustand gezeigt. In diese Stellung gelangt der Deckel ausgehend von der Schließstellung, in welcher das vordere Gleitelement 18 im horizontalen vorderen Bereich des Einsatzteils 38 liegt, der Kulissenstift 28 des Schlittens 30 am vorderen Ende des Kulissenschlitzes 26 liegt und das hintere Gleitelement 22 unterhalb des Einsatzteils 40 liegt, dadurch, dass der Schlitten 30 mittels des Antriebskabels 36 nach hinten bewegt wird. Dabei wird zunächst der Deckelträger 16 an einer wesentlichen Verschiebebewegung in Dachlängsrichtung dadurch gehindert, dass der hintere Gleitschuh 22 in dem nahezu vertikalen Anfangsbereich 41 liegt, so dass der Kulissenstift 28 in dem Kulissenschlitz 26 nach hinten gleiten kann. Dadurch wird aufgrund der Gestaltung des Kulissenschlitzes 26 der Deckel 10 mit seiner Hinterkante angehoben, wobei jedoch noch keine wesentliche Verschiebung des Deckels nach hinten stattfindet. Durch die Ausstellbewegung des Deckels 10 wird auch der hintere Gleitschuh 22 in dem nahezu vertikal verlaufenden Anfangsbereich des Einsatzteils 41 nach oben angehoben, bis er den horizontalen Teil des Führungskanals 24 erreicht und dadurch die Blockade der Verschiebebewegung gelöst wird. Dabei befindet sich nun der Kulissenstift 28 in dem nahezu vertikal verlaufenden hinteren Endbereich des Kulissenschlitzes 26. Das weitere Verschieben des Schlittens 30 nach hinten bewirkt nun mittels der Anlage des Kulissenstifts 28 am hinteren Ende des Kulissenschlitzes 26, dass der Träger 16 und damit der Deckel 10 zu einer Verschiebebewegung nach hinten mitgenommen werden. Dabei gelangt der vordere Gleitschuh 18 in den ansteigenden Bereich des Einsatzteils 38, wodurch die Deckelvorderkante angehoben wird, bis der Gleitschuh 18 in den horizontalen Teil des Führungskanals 20 eintritt. Bei der weiteren Öffnungsbewegung wird nun der Deckel in dieser ausgestellten Stellung mit seiner Hinterkante über die feste Dachhaut geschoben, um die Dachöffnung 12 freizugeben.
Die Schließbewegung läuft in umgekehrter Richtung ab, wobei die Anlage des Kulissenstifts 28 an dem vertikalen hinteren Endbereich des Kulissenschlitzes 26 für eine Mitnahme des Trägers 16 und damit des Deckels 10 sorgt. Die Führungskanäle 20 und 24 dienen somit, abgesehen vom Beginn der Öffnungsbewegung, als Kulissenbahnen zum Ausstellen und Verschieben des Deckels 10. Dadurch, dass die Führungsbahnen 20 und 24 in Dachquerrichtung versetzt an den gegenüberliegenden Wangen 42 und 44 der Führungsschiene 40 ausgebildet sind, wird eine Überkreuzung der beiden Bahnen 20 und 24 vermieden und es wird ferner die Stabilität der Führung des Deckelträgers 16 verbessert.

Statt einem Deckel 10 können auch zwei hintereinander liegende, im wesentlichen identische Deckel vorgesehen sein, um ein sogenanntes Doppelspoilerdach zu bilden. Die Ausstellmechanik ist dabei für die beiden Deckel im wesentlichen identisch ausgebildet.

## Patentansprüche

1. Öffnungsfähiges Fahrzeugdach, mit einem Träger (16) für ein Abdeckelement (10) für eine Dachöffnung (12), der mittels eines ersten Gleitelements (18) und eines zweiten Gleitelements (22), die in Dachlängsrichtung zueinander versetzt sind, in einer dachfesten Führung (40) in Dachlängsrichtung verschiebbar geführt ist, wobei das erste Gleitelement (18) entlang einer ersten Führungsbahn (20) und das zweite Gleitelement (22) entlang einer zweiten Führungsbahn (24) in Hochrichtung geführt ist, und wobei die erste und die zweite Führungsbahn (20 bzw. 24) auf unterschiedlichem Höhenniveau liegen, **dadurch gekennzeichnet, dass** die erste Führungsbahn (20) und die zweite Führungsbahn (24) in Dachquerrichtung zueinander versetzt sind.

2. Fahrzeugdach nach Anspruch 1, **dadurch gekennzeichnet, dass** es sich bei dem Abdeckelement (10) um einen Deckel eines Spoilerdaches handelt, wobei die erste Führungsbahn (20) und die zweite Führungsbahn (24) so ausgebildet sind, dass das Verschieben des Trägers (16) aus der Schließstellung des Abdeckelements (10) nach hinten eine Ausstellbewegung des Abdeckelements (10) mit seiner Hinterkante bewirkt und der Deckel in ausgestellter Stellung nach hinten geschoben werden kann, um die Dachöffnung (12) freizugeben.

3. Fahrzeugdach nach Anspruch 1 oder 2, **dadurch gekennzeichnet, dass** die dachfeste Führung (40) als Schiene ausgebildet ist, wobei, die erste und die zweite Führungsbahn (20 bzw. 24) auf gegenüberliegenden Seiten (Wangen 42, 44) der Schiene ausgebildet sind.

4. Fahrzeugdach nach Anspruch 3, **dadurch gekennzeichnet, dass** die dachfeste Führung (Schiene 40) im Querschnitt im wesentlichen U-förmig ausgebildet ist und die erste Führungsbahn (20) und die zweite Führungsbahn (24) auf der Innenseite der beiden Wangen (42, 44) ausgebildet sind.

5. Fahrzeugdach nach einem der vorhergehenden Ansprüche, **dadurch gekennzeichnet, dass** die erste Führungsbahn (20) und die zweite Führungsbahn (24), abgesehen von ihrem Anfangsbereich (38, 41), im wesentlichen horizontal verlaufen.

6. Fahrzeugdach nach Anspruch 5, **dadurch gekennzeichnet, dass** die erste Führungsbahn (20) und die zweite Führungsbahn (24) in ihrem Anfangsbereich (38, 41) ansteigend verlaufen.

7. Fahrzeugdach nach Anspruch 5 oder 6, **dadurch gekennzeichnet, dass** der Anfangsbereich (38, 41) der ersten Führungsbahn (20) und/oder der zweiten Führungsbahn (24) als Einsatzteil ausgebildet ist.

## Claims

1. Opening vehicle roof, having a carrier (16) for a covering element (10) for a roof opening (12), which is guided such that it can be displaced in the roof longitudinal direction in a guide (40) fixed to the roof, by means of a first sliding element (18) and a second sliding element (22), which are offset in relation to each other in the roof longitudinal direction, the first sliding element (18) being guided in the vertical direction along a first guide track (20) and the second sliding element (22) being guided in the vertical direction along a second guide track (24), and the first and the second guide track (20 and 24) being located at a different vertical level, **characterized in that** the first guide track (20) and the second guide track (24) are offset in relation to each other in the roof transverse direction.

2. Vehicle roof according to Claim 1, **characterized in that** the covering element (10) is a panel of a spoiler roof, the first guide track (20) and the second guide track (24) being formed in such a way that the displacement of the carrier (16) rearwards from the closed position of the covering element (10) effects a raising movement of the covering element (10) at its rear edge, and the panel can be pushed rearwards when in its raised position in order to expose the roof opening (12).

3. Vehicle roof according to Claim 1 or 2, **characterized in that** the guide (40) fixed to the roof is formed as a rail, the first and the second guide track (20 and 24) being formed on opposite sides (cheeks 42, 44) of the rail.

4. Vehicle roof according to Claim 3, **characterized in that** the guide fixed to the roof (rail 40) is substantially U-shaped in cross section, and the first guide track (20) and the second guide track (24) are formed on the inside of the two cheeks (42, 44).

5. Vehicle roof according to one of the preceding claims, **characterized in that** the first guide track (20) and the second guide track (24) run substantially horizontally, apart from their initial region (38, 41).

6. Vehicle roof according to Claim 5, **characterized in that** the first guide track (20) and the second guide track (24) run in a rising manner in their initial region (38, 41).

7. Vehicle roof according to Claim 5 or 6, **characterized in that** the initial region (38, 41) of the first guide track (20) and/or the second guide track (24) is formed as an insert part.

## Revendications

1. Toit ouvrant pour véhicule, avec un support (16) pour un élément de recouvrement (10) d'une ouverture de toit (12), support qui est guidé de façon coulissante dans un guidage solidaire du toit (40) dans le sens longitudinal du toit, à l'aide d'un premier élément coulissant (18) et d'un deuxième élément coulissant (22) qui sont décalés l'un par rapport à l'autre dans le sens longitudinal du toit, le premier élément coulissant (18) étant guidé le long d'une première glissière de guidage (20) et le deuxième élément coulissant (22) étant guidé dans le sens ascendant le long d'une deuxième glissière de guidage (24), et les première et deuxième glissières de guidage (20 et 24) étant situées à des niveaux de hauteurs différents, **caractérisé en ce que** la première glissière de guidage (20) et la deuxième glissière de guidage (24) sont décalées l'une par rapport à l'autre dans le sens transversal du toit.

2. Toit pour véhicule selon la revendication 1, **caractérisé en ce que** l'élément de recouvrement (10) est un abattant ou couvercle d'un toit déflecteur, la première glissière de guidage (20) et la deuxième glissière de guidage (24) étant conçues de telle sorte que le coulissement du support (16) depuis la position de fermeture de l'élément de recouvrement (10) vers l'arrière provoque un mouvement d'inclinaison de l'élément de recouvrement (10) avec son arête arrière et l'abattant peut être poussé vers l'arrière en position inclinée pour libérer l'ouverture de toit (12).

3. Toit pour véhicule selon la revendication 1 ou 2, **caractérisé en ce que** le guidage solidaire du toit (40) est conçu sous forme de rail, les première et deuxième glissières de guidage (20 et 24) étant formées sur les côtés opposés (joues 42, 44) du rail.

4. Toit pour véhicule selon la revendication 3, **caractérisé en ce que** le guidage solidaire du toit (rail 40) est, en vue de coupe, conçu essentiellement en forme de U et la première glissière de guidage (20) et la deuxième glissière de guidage (24) sont formées sur le côté intérieur des deux joues (42, 44).

5. Toit pour véhicule selon l'une quelconque des revendications précédentes, **caractérisé en ce que** la première glissière de guidage (20) et la deuxième glissière de guidage (24), à l'exception de leur section de départ (38, 41), s'étendent essentiellement à l'horizontal.

6. Toit pour véhicule selon la revendication 5, **caractérisé en ce que** la première glissière de guidage (20) et la deuxième glissière de guidage (24) s'étendent de façon ascendante au niveau de leur section de départ (38, 41).

7. Toit pour véhicule selon la revendication 5 ou 6, **caractérisé en ce que** la section de départ (38, 41) de la première glissière de guidage (20) et/ou de la deuxième glissière de guidage (24) est conçue comme pièce rapportée ou insert.
